# FASCICULE DE BREVET EUROPEEN

(11) **EP 2 000 392 B1**
(45) Date de publication et mention de la délivrance du brevet: **01.09.2010**
(21) Numéro de dépôt: 08300218.8
(22) Date de dépôt: 03.06.2008
(51) Int. Cl.: B62D 25/08

(54) **Agencement d'auvent pour un véhicule automobile**
Luftschlitzanordnung für Kraftfahrzeug
Cowl arrangement for an automobile

(30) Priorité: 05.06.2007 FR 0755460
(43) Date de publication de la demande: 10.12.2008
(73) Titulaire: Renault S.A.S., 92100 Boulogne-Billancourt (FR)
(72) Inventeur: Bettray, Guy, 78280, Guyancourt (FR)

(56) Documents cités:
- EP-A- 0 301 494
- WO-A-2006/092675
- DE-A1-102005 033 030

## Description

L'invention concerne un agencement d'auvent pour un véhicule automobile.

L'invention concerne plus particulièrement un agencement d'auvent pour un véhicule automobile dont un compartiment moteur, destiné à recevoir des organes mécaniques du véhicule, comporte au moins un tablier arrière sur lequel repose une partie inférieure d'un pare-brise du véhicule, et en avant dudit tablier, et deux éléments sensiblement longitudinaux, opposés transversalement, qui sont destinés à porter extérieurement des ailes du véhicule et qui sont destinés à porter intérieurement des pieds de charnières d'articulation d'un capot destiné à fermer le compartiment moteur, ledit compartiment moteur comportant un auvent sensiblement transversal, agencé en avant du pare-brise, qui s'étend à l'intérieur du compartiment moteur et qui est destiné à porter un mécanisme d'essuie-glace du véhicule et un joint d'étanchéité du capot.

On connaît de nombreux exemples d'agencements de ce type, voir par exemple EP-A-301494.

II existe globalement deux types d'agencements pour les compartiments moteur des véhicules automobiles.

Selon une conception connue, qui est généralement associée à des véhicules d'une taille élevée, le compartiment moteur comporte une paroi transversale de doublure, qui est agencée parallèlement au tablier du véhicule suivant au moins une partie de sa hauteur. Dans cette configuration, l'auvent repose sur le bord inférieur du pare-brise et sur un bord supérieur de ladite paroi. Un tel auvent porte un joint transversal d'étanchéité du capot et est à même de résister à la pression qu'exerce ce joint lors de la fermeture du capot

Les véhicules de petite taille, comme les véhicules citadins, ne bénéficient généralement pas de paroi transversale de doublure, car celle-ci empiète considérablement sur l'espace disponible dans le compartiment moteur. Ces véhicules comportent un auvent de taille réduite, dépourvu de grille d'auvent, qui n'est fixé qu'au bord inférieur du pare-brise. La ventilation de ces véhicules ne comporte donc pas de grille d'auvent susceptible d'être agencée en amont du système de ventilation du véhicule, et pour cette raison le système de ventilation est abouché à un conduit indépendant débouchant généralement en regard d'une grille placée sur le capot du véhicule. D'autre part, ces auvents sont généralement dépourvus de joint d'étanchéité du capot, car ils ne pourraient supporter la pression qu'exercerait un tel joint sur un tel auvent.

L'invention propose un agencement permettant de bénéficier d'un auvent de dimension élevée sur un véhicule de taille réduite, cet auvent pouvant être équipé d'une grille destinée à être agencée en amont d'un système de ventilation du véhicule.

Dans ce but, l'invention propose un agencement du type décrit précédemment, caractérisé en ce qu'un bord avant libre de l'auvent comporte au moins un renfort transversal qui est en appui sur un pied de charnière et sur un organe mécanique du véhicule, et qui est destiné à rigidifier l'auvent pour lui permettre de résister à l'appui du capot sur le joint d'étanchéité.

Selon d'autres caractéristiques de l'invention :
- le bord avant de l'auvent comporte deux renforts transversaux droite et gauche qui prennent chacun appui sur un pied associé d'une charnière du capot et sur un organe mécanique du véhicule,
- les renforts transversaux prennent tous deux appui sur le même organe mécanique du véhicule.
- l'organe mécanique est une boîte à eau associée au moteur du véhicule, qui s'étend au moins partiellement sous l'auvent,
- une partie intermédiaire de l'auvent comporte une nervure transversale qui s'étend transversalement suivant toute la largeur de l'auvent et qui est destiné à être chevauchée par le joint d'étanchéité du capot,
- l'auvent comporte au moins une grille transversale qui s'étend longitudinalement entre la nervure et le bord avant de l'auvent,
- chaque renfort transversal est soudé sur le bord avant de l'auvent.

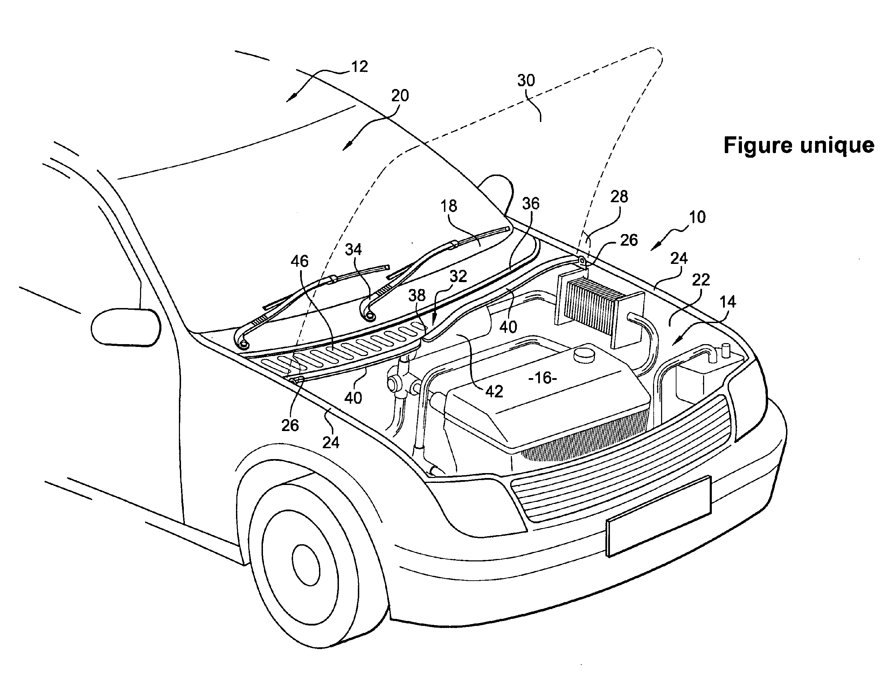

D'autres caractéristiques et avantages de l'invention apparaîtront à la lecture de la description détaillée qui suit pour la compréhension de laquelle on se reportera au dessin annexé dans lequel la figure unique est une vue d'ensemble en perspective d'un agencement selon l'invention.

On a représenté sur la figure unique un agencement 10 d'auvent pour un véhicule automobile 12 dont un compartiment moteur 14 est destiné à recevoir des organes mécaniques du véhicule tel qu'un moteur 16.

De manière connue, l'agencement 10 comporte au moins un tablier arrière (non représenté) sur lequel repose une partie inférieure 18 d'un pare-brise 20 du véhicule. L'agencement 10 comporte aussi en avant dudit tablier, deux éléments 22 sensiblement longitudinaux, opposés transversalement, qui sont destinés à porter extérieurement des ailes 24 du véhicule et qui sont destinés à porter intérieurement des pieds 26 de charnières 28 d'articulation d'un capot 30 destiné à fermer le compartiment 14 moteur.

De manière connue, le compartiment moteur 14 comporte un auvent 32 sensiblement transversal, agencé en avant du pare-brise 20, qui s'étend à l'intérieur du compartiment moteur 14 et qui est destiné à porter un mécanisme 34 d'essuie-glace du véhicule et un joint d'étanchéité (non représenté) du capot 30.

A cet effet, une partie intermédiaire de l'auvent comporte une nervure transversale 36 qui s'étend transversalement suivant toute la largeur de l'auvent 32 et qui est destiné à être chevauchée par le joint d'étanchéité du capot 30. Le joint est destiné à être écrasé contre la nervure 36 lors de la fermeture du capot 30 pour en assurer l'étanchéité.

Conformément à l'invention, pour garantir que l'auvent 32 fléchisse pas lors de la fermeture du capot 30 et pour lui permettre de résister à l'appui du capot 30 sur le joint d'étanchéité, un bord avant 38 libre de l'auvent 32 comporte au moins un renfort transversal 40 qui est en appui sur un pied 26 de charnière 28 et sur un organe 42 mécanique du véhicule, et qui est destiné à rigidifier l'auvent 32.

A titre d'exemple l'auvent 32 est réalisé en un matériau plastique et le renfort transversal d'auvent 40 est réalisé lui aussi en un matériau plastique et est soudé sur le bord avant 38 de l'auvent 32.

Dans le mode de réalisation préféré de l'invention, le bord avant 38 de l'auvent comporte deux renforts transversaux 40 droite et gauche qui prennent chacun appui sur un pied 26 associé d'une charnière 28 du capot 30 et sur un organe 42 mécanique du véhicule.

Par exemple, et de manière non limitative de l'invention, les renforts transversaux 40 prennent tous deux appui sur le même organe mécanique 42 du véhicule.

De préférence, l'organe mécanique 42 se trouvera être un organe s'étendant au moins partiellement sous l'auvent 32, par exemple une boîte à eau 42 associée au moteur du véhicule.

Cette configuration est d'autant plus avantageuse qu'elle permet de rigidifier l'auvent 32 alors que celui comporte par exemple au moins une grille transversale 46 qui s'étend longitudinalement entre la nervure 36 et le bord avant 38 de l'auvent 32. Cette grille 46 tend à amoindrir la résistance à la flexion de l'auvent 32, qui se trouve néanmoins suffisamment maintenu par ses renforts 40.

L'invention propose donc un agencement d'auvent innovant particulièrement destiné aux véhicules de petite dimension qui sont dépourvus de cloison doublant le tablier. Cette configuration permet de disposer d'une grille de ventilation incluse dans l'auvent 32 et permet de se dispenser de l'insertion d'une bouche de ventilation séparée incluse dans le capot 30.

## Revendications

1. Agencement (10) d'auvent pour un véhicule (12) automobile dont un compartiment moteur (14), destiné à recevoir des organes mécaniques du véhicule, comporte au moins un tablier arrière sur lequel repose une partie inférieure (18) d'un pare-brise (20) du véhicule, et en avant dudit tablier, deux éléments (22) sensiblement longitudinaux, opposés transversalement, qui sont destinés à porter extérieurement des ailes (24) du véhicule et qui sont destinés à porter intérieurement des pieds (26) de charnières (28) d'articulation d'un capot (30) destiné à fermer le compartiment moteur (14), ledit compartiment (14) moteur comportant un auvent (32) sensiblement transversal, agencé en avant du pare-brise (20), qui s'étend à l'intérieur du compartiment moteur (14) et qui est destiné à porter un mécanisme (34) d'essuie-glace du véhicule et un joint d'étanchéité du capot,
**caractérisé en ce qu'**un bord avant libre (38) de l'auvent (32) comporte au moins un renfort transversal (40) qui est en appui sur un pied (26) de charnière (28) et sur un organe (42) mécanique du véhicule, et qui est destiné à rigidifier l'auvent (32) pour lui permettre de résister à l'appui du capot (30) sur le joint d'étanchéité.

2. Agencement (10) selon la revendication précédente, **caractérisé en ce que** le bord avant (38) de l'auvent comporte deux renforts (40) transversaux droite et gauche qui prennent chacun appui sur un pied (26) associé d'une charnière (28) du capot (30) et sur un organe (42) mécanique du véhicule.

3. Agencement (10) selon la revendication précédente, **caractérisé en ce que** les renforts transversaux (40) prennent tous deux appui sur le même organe mécanique (42) du véhicule.

4. Agencement (10) selon la revendication précédente, **caractérisé en ce que** l'organe mécanique est une boîte à eau (42) associée au moteur du véhicule, qui s'étend au moins partiellement sous l'auvent (32).

5. Agencement (10) selon l'une quelconque des revendications précédentes, **caractérisé en ce qu'**une partie intermédiaire de l'auvent comporte une nervure transversale (36) qui s'étend transversalement suivant toute la largeur de l'auvent (32) et qui est destiné à être chevauchée par le joint d'étanchéité du capot (30).

6. Agencement (10) selon la revendication précédente, **caractérisé en ce que** l'auvent (32) comporte au moins une grille transversale (46) qui s'étend longitudinalement entre la nervure (36) et le bord avant (38) de l'auvent (32).

7. Agencement (10) selon l'une quelconque des revendications précédentes, **caractérisé en ce que** chaque renfort transversal (40) est soudé sur le bord avant (38) de l'auvent (32).

## Claims

1. Cowl arrangement (10) for a motor vehicle (12) of which an engine compartment (14), intended to house mechanical components of the vehicle, comprises at least one rear bulkhead on which a lower part (18) of a vehicle windscreen (20) rests and, forward of the said bulkhead, two transversely opposed substantially longitudinal elements (22) which are intended externally to bear the wings (24) of the vehicle and which are intended internally to bear the legs (26) of hinges (28) used to hinge a bonnet (30) intended to close the engine compartment (14), the said engine compartment (14) comprising a substantially transverse cowl (32) positioned forward of the windscreen (20) and extending into the engine compartment (14) and intended to bear a vehicle windscreen wiper mechanism (34) and a bonnet seal,
**characterized in that** a free front edge (38) of the cowl (32) comprises at least one transverse reinforcement (40) which rests against a leg (26) of a hinge (28) and against a mechanical member (42) of the vehicle and which is intended to stiffen the cowl (32) to allow it to withstand the force of the bonnet (30) pressing against the seal.

2. Arrangement (10) according to the preceding claim, **characterized in that** the front edge (38) of the cowl comprises two transverse reinforcements (40), one right and one left, each of which bears against an associated leg (26) of a hinge (28) of the bonnet (30) and against a mechanical member (42) of the vehicle.

3. Arrangement (10) according to the preceding claim, **characterized in that** the transverse reinforcements (40) both bear against the same mechanical member (42) of the vehicle.

4. Arrangement (10) according to the preceding claim, **characterized in that** the mechanical member is a water box (42) associated with the vehicle engine and which engine of the at least extends partially under the cowl (32) .

5. Arrangement (10) according to any one of the preceding claims, **characterized in that** an intermediate part of the cowl comprises a transverse rib (36) which extends transversely along the entire width of the cowl (32) and that the seal for the bonnet (30) is intended to straddle.

6. Arrangement (10) according to the preceding claim, **characterized in that** the cowl (32) comprises at least one transverse grille (46) which extends longitudinally between the rib (36) and the front edge (38) of the cowl (32) .

7. Arrangement (10) according to any one of the preceding claims, **characterized in that** each transverse reinforcement (40) is welded to the front edge (38) of the cowl (32).

## Patentansprüche

1. Luftschlitzanordnung (10) für ein Kraftfahrzeug (12), dessen Motorraum (14), der zur Aufnahme der mechanischen Elemente des Fahrzeugs bestimmt ist, mindestens eine Motorraumrückwand, an der ein unterer Teil (18) einer Windschutzscheibe (20) des Fahrzeugs ruht, und vor der Motorraumwand zwei im Wesentlichen längliche, sich quer gegenüberliegende Elemente (22) umfasst, die dazu bestimmt sind, außen Flügel (24) des Fahrzeugs zu tragen, und dazu bestimmt sind, innen Füße (26) von Scharnieren (28) zur Anlenkung einer Haube (30) zu tragen, die dazu bestimmt ist, den Motorraum (14) zu verschließen, wobei der Motorraum (14) einen im Wesentlichen queren Luftschlitz (32) umfasst, der vor der Windschutzscheibe (20) angeordnet ist, sich im Inneren des Motorraums (14) erstreckt und dazu bestimmt ist, einen Scheibenwischermechanismus (34) des Fahrzeugs und eine Dichtung der Haube zu tragen,
**dadurch gekennzeichnet, dass** ein vorderer freier Rand (38) des Luftschlitzes (32) mindestens eine Queraussteifung (40) umfasst, die sich auf einem Fuß (26) des Scharniers (28) und auf einem mechanischen Element (42) des Fahrzeugs abstützt und dazu bestimmt ist, den Luftschlitz (32) auszusteifen, damit er der Aufstützung der Haube (30) auf der Dichtung widerstehen kann.

2. Anordnung (10) nach dem vorhergehenden Anspruch, **dadurch gekennzeichnet, dass** der vordere Rand (38) des Luftschlitzes rechts und links zwei Queraussteifungen (40) umfasst, die sich jeweils auf einem einem Scharnier (28) der Haube (30) zugeordneten Fuß (26) und auf einem mechanischen Element (42) des Fahrzeugs abstützen.

3. Anordnung (10) nach dem vorhergehenden Anspruch, **dadurch gekennzeichnet, dass** sich beide Queraussteifungen (40) auf demselben mechanischen Element (42) des Fahrzeugs abstützen.

4. Anordnung (10) nach dem vorhergehenden Anspruch, **dadurch gekennzeichnet, dass** es sich bei dem mechanischen Element um einen dem Motor des Fahrzeugs zugeordneten Wasserkasten (42) handelt, der sich mindestens teilweise unter dem Luftschlitz (32) erstreckt.

5. Anordnung (10) nach einem der vorhergehenden Ansprüche, **dadurch gekennzeichnet, dass** ein Zwischenteil des Luftschlitzes eine Querrippe (36) umfasst, die sich quer entlang der gesamten Breite des Luftschlitzes (32) erstreckt und dazu bestimmt ist, von der Dichtung der Haube (30) übergriffen zu werden.

6. Anordnung (10) nach dem vorhergehenden Anspruch, **dadurch gekennzeichnet, dass** der Luftschlitz (32) mindestens ein Quergitter (46) umfasst, das sich in Längsrichtung zwischen der Rippe (36) und dem vorderen Rand (38) des Luftschlitzes (32) erstreckt.

7. Anordnung (10) nach einem der vorhergehenden Ansprüche, **dadurch gekennzeichnet, dass** jede Queraussteifung (40) am vorderen Rand (38) des Luftschlitzes (32) angeschweißt ist.
